# Europäisches Patentamt

## European Patent Office

## Office européen des brevets

(11) Veröffentlichungsnummer: **0 503 555 A1**

# EUROPÄISCHE PATENTANMELDUNG

(21) Anmeldenummer: **92104059.8**

(22) Anmeldetag: **10.03.92**

(51) Int. Cl.⁵: **C04B 28/34**, //(C04B28/34, 14:38,24:38),(C04B28/34,14:38, 24:24)

(30) Priorität: **13.03.91 EP 91103822**

(43) Veröffentlichungstag der Anmeldung:
**16.09.92 Patentblatt 92/38**

(84) Benannte Vertragsstaaten:
**AT BE CH DE DK ES FR GB GR IT LI LU MC NL PT SE**

(71) Anmelder: **Deutsche Rockwool Mineralwoll-GmbH Karl-Schneider-Strasse 14-18 W-4390 Gladbeck(DE)**

(72) Erfinder: **Klose, Gerd-Rüdiger, Dr. Ing. Lembecker Strasse 76 W-4270 Dorsten(DE)**
Erfinder: **Rudolph, Karl, Dr. Ing. Sydowstrasse 2a W-4250 Bottrop(DE)**

(74) Vertreter: **Köhne, Friedrich, Dipl.-Ing. Rondorferstrasse 5a W-5000 Köln 51 (Marienburg)(DE)**

(54) **Mineralwollerzeugnis.**

(57) Mineralwollerzeugnisse bestehen im wesentlichen aus Mineralfasern, insbesondere Steinwolle, und Bindemittel, welches unter Hitzebehandlung aushärtbar ist.

Um ein thermisch hochbelastbares Mineralwollerzeugnis zu schaffen, bei welchem sich keine schädlichen Abgase bilden und um die üblichen Festigkeitseigenschaften beizubehalten, wird vorgeschlagen, daß als Bindemittel in Wasser dispergiertes Aluminiummetaphosphat $Al(PO_3)_3$ oder alternativ in Wasser gelöstes Monoaluminiumphosphat $Al(H_2PO_4)_3$ vorgesehen ist.

EP 0 503 555 A1

Die Erfindung bezieht sich auf ein Mineralwollerzeugnis, bestehend im wesentlichen aus Mineralfasern, insbesondere Steinwolle, und Bindemittel, welches unter Hitzebehandlung aushärtbar ist.

Unter dem Begriff Mineralwollerzeugnis werden vor allem rollbare Dämmfilze, Dämmplatten, Dämmmatten, Lamellenmatten und andere Formkörper, insbesondere alle Körper verstanden, die einer ständigen oder wechselnden thermischen Belastung unterworfen sind, wie zum Beispiel Dämmaterialien bei Heizungen bzw. Heizöfen jeglicher Art.

Die Herstellung von Mineralwolle-Dämmstoffen erfolgt durch die Zerfaserung silikatischer Schmelze. Die Durchmesser der glasig erstarrten Mineralfasern beträgt etwa 1 bis etwa 10 $\mu$m bei mittleren Werten von 4 bis 5 $\mu$m.

Als Bindemittel für Mineralwolle-Dämmstoffe haben sich wässrige Lösungen von Phenol-Harnstoff-Formaldehydharzen bewährt. Die in einem frühen Zustand der Polykondensationsreaktion befindlichen Harze sind in Wasser weitgehend löslich und lassen sich deshalb beim Eintrag in den Faserstrom hoch dispergieren, so daß sie auf den feinen Mineralfasern sehr dünne Überzüge bilden und diese an den Kontaktstellen punktförmig verbinden. Die Bindemittelgehalte in den Dämmstoffen betragen weniger als 8 Masse-%. Hinzu kommen noch sogenannte Schmälzmittel zur Hydrophobierung und Erhöhung der Griffigkeit. Diese Schmälzmittel bestehen aus Öl-in-Wasser-Emulsionen, Mineralölen, Silikonölen, Silikonharzen und Modifikationen von Silikonharzen.

Durch die Verwendung des wässrigen Mediums für die Dispergierung des Phenol-Formaldehydharzes werden einmal die Emissionen unter Umständen umweltschädigender organischer Lösungsmittel verhindert, aber was für die Technologie noch wesentlicher ist, die Abkühlungsgeschwindigkeit der Fasern wird so beschleunigt, daß diese mit Sicherheit glasig erstarren und die Temperaturen letztlich so niedrig sind, daß es nicht zu einer Vorhärtung der Bindemittelfilme oder -tröpfchen auf den Fasern in den sogenannten Sammelkammern kommt. Verfahrensbedingt müssen die einzelnen Mineralfasern in den Sammelkammern aufgefangen werden. Sie werden anschließend zu der gewünschten Dicke aufgeschichtet und in einem konstanten Faserstrom dem Härteofen zugeführt. Erst in diesem Härteofen wird durch den vorgegebenen Abstand der Druckbänder und die vorgegebene Faserstromdichte die entsprechende Rohdichte, Dicke und Struktur des späteren Dämmstoffs eingestellt. Durch Heißluft wird das modifizierte Phenolharz bei Temperaturen zwischen 250° C und 300° C zu einem duroplastischen Harz irreversibel ausgehärtet.

Der wesentliche Nachteil des organischen Phenol-Harnstoff-Formaldehydharzes besteht darin, daß es sich bei höheren Temperaturen zersetzt. Dabei bilden sich geruchsbelästigende, unter Umständen auch gesundheitsschädliche Gase. Die thermische Beständigkeit des Bindemittels liegt in der Größenordnung von 250° C bis 325° C und somit weit unter dem Schmelzpunkt der Fasern, der bei aus Rohstoffen wie Diabas oder Basalt erschmolzenen Fasern über 1000° C beträgt.

Es hat nicht an Versuchen gefehlt, das organische Bindemittel durch anorganische Bindemittel zu ersetzen. So sind Versuche bekannt geworden, Wassergläser zur Bindung der Faserkörper einzusetzen. Das gilt insbesondere für die Herstellung fester Faserkörper. Auch eignen sich Tonminerale hierzu. Fasern können auch über den Sol-Gel-Prozeß, z. B. mit Natrium-Bor-Silizium-Verbindungen gebunden werden. Diese Bindung ist aber in allen Fällen verhältnismäßig spröde. Es werden sehr hohe Bindemittelmengen benötigt. Die in der Mineralwollindustrie übliche Verfahrenstechnik ist hierbei nicht anwendbar. Die daraus hergestellten Dämmstoffe weisen auch nicht die bis in den Rohdichtebereich < 200 kg/m$^3$ für zahlreiche Anwendungsfälle erforderliche Flexibilität und bekannte elastisch federnde Charakteristik der Faserdämmstoffe auf. Diese Eigenschaft ist aber unumgänglich.

Bekannt ist ferner, daß in dem binären System $Al_2O_3$-$P_2O_5$ das Aluminiummetaphosphat ein guter Glasbildner ist. Zusammensetzungen mit höheren Aluminiumoxid-Gehalten, wie z. B. $ALPOH_4$ kommen erfahrungsgemäß nicht zum Tragen, weil sie kristallin erstarren und sich wegen der stark unterschiedlichen Ausdehnungskoeffizienten zwischen Bindemittel und Faserglas von demselben ablösen und nicht die gewünschte Bindung bringen. Das ist auch bei anderen kristallin erstarrenden Materialien der Fall.

Es gibt außerdem kettenförmig aufgebaute Polyphosphate, wie z. B. Natriumpolyphosphate, die nur wasserlösliche Gläser zu bilden vermögen, was die im Einsatz erforderliche dauerhafte Bindung nicht gewährleistet.

Der Erfindung liegt die Aufgabe zu Grunde, ein Mineralwollerzeugnis zu schaffen, welches unter Beibehaltung üblicher Festigkeitseigenschaften thermisch hoch belastbar ist und bei welchem sich keine geruchsbelästigenden oder gesundheitsschädlichen Gase bilden.

Die gestellte Aufgabe wird erfindungsgemäß dadurch gelöst, daß als Bindemittel in Wasser dispergiertes Aluminiummetaphosphat $Al(PO_3)_3$ vorgesehen ist.

Auf diese Weise ergibt sich der wesentliche Vorteil, daß die Mineralwollerzeugnisse bzw. Dämmstoffe thermisch bis an den Erweichungspunkt der Mineralfasern bearbeitbar bzw. belastbar sind, wobei sich keine schädlichen Gase bilden.

Der weitere Vorteil besteht darin, daß eine gute und dauerhafte Bindung zwischen dem Bindemittel und den Mineralfasern erreicht wird. Dies ist unter anderem darauf zurückzuführen, daß die Metaphosphorsäure ringförmige Moleküle unterschiedlicher Größe bildet. Da die üblichen Festigkeitseigenschaften beibehalten werden, läßt sich das erfindungsgemäße Mineralwollerzeugnis zu rollbaren Dämmfilzen, Dämmplatten, Dämmatten, Lamellenmatten und zu jeder beliebigen Art anderer Formkörper verarbeiten.

Vorteilhafterweise beträgt der Anteil am Aluminiummetaphosphat etwa 3 bis 20 Masse-%, vorzugsweise 7 bis 12 Masse-%, bezogen auf die Gesamtmasse.

In der Praxis kann das Aluminiummetaphosphat als mikrofeines Pulver hergestellt werden, das dann in Wasser dispergiert und auf die heißen, gerade erzeugten Mineralfasern in gleichmäßiger, feinstverteilter Form aufgesprüht wird.

Die gestellte Aufgabe wird erfindungsgemäß auch alternativ dadurch gelöst, daß als Bindemittel in Wasser gelöstes Monoaluminiumphosphat Al$(H_2PO_4)_3$ vorgesehen ist.

Die Bezeichnung Monoaluminiumphosphat ist hier als Sammelbegriff zu verstehen. In der Literatur wird auch die allgemeine Bezeichnung Aluminiumhydrogenphosphat oder Aluminiumdihydrogenphosphat verwendet. Im Rahmen der Erfindung kann als Bindemittel auch eine Sonderform, nämlich in Wasser gelöstes Monoaluminiumphosphat-Trihydrat $Al(PO_3)_3 \cdot 3H_2O$ oder ein Aluminiumdihydrogenphosphat mit der chemischen Formel Al$(H_2PO_4)_3 \cdot 3H_2O$ verwendet werden.

Durch eine thermische Behandlung der mit den beschriebenen Bindemitteln imprägnierten Fasern bei einer Temperatur von über 250° C bildet sich ein saures Triphosphat $AlH_2P_3O_{10}$ und bei einer weiteren Temperaturerhöhung auf über 500° C, insbesondere auf 600° C, wandelt sich das Bindemittel in langkettiges Aluminiumpolyphosphat und ein zyklisches Aluminiumtetrametaphosphat um. Der temperaturbedingte unterschiedliche Umwandlungsgrad des eingesetzten Bindemittels wird gezielt dazu benutzt, um einmal flexible staubarme Bindemittel für die Dämmung von periodisch betriebenen, thermisch hochbelasteten Anlagen, wie Öfen u.dgl., herzustellen. Durch den Einsatz bei derartigen Anlagen wird das Bindemittel in den thermisch hochbelasteten Bereichen der Dämmung bereits irreversibel in wasserunlösliche Polyphosphate bzw. Tetrametaphosphate umgewandelt. Im Außenbereich der betreffenden Anlage, der thermisch weniger hochbelastet ist, verbleibt das Bindemittel in einem reversiblen Zustand. In der Folge bleibt das Mineralwollerzeugnis mit der in ihm enthaltenen Bindung durch das Bindemittel ausgesprochen flexibel und elastisch. Ein weiterer Vorteil dieses reversiblen Zustandes ist, daß das Bindemittel z.B. während möglicher Stillstände der Anlage zuläßt, daß das Mineralwollerzeugnis Feuchtigkeit aus der Außenluft aufnehmen kann, so daß damit auch die Staubbindung des Mineralwollerzeugnisses günstig beeinflußt wird.

Für andere Anwendungsfälle in der Praxis ist es auch vorteilhaft, wenn das Bindemittel bereits im Zuge des Herstellungprozesses des Mineralwollerzeugnisses in die gewünschte Umwandlungsstufe gebracht wird, indem die MineralwolleDämmstoffbahn durch einen Ofen geleitet wird, der auf die entsprechende Temperatur eingestellt ist.

Was oben bereits für das Aluminiummetaphosphat erläutert wurde, gilt auch für die zuvor erläuterte Gruppe von Monoaluminiumphosphaten. Es ergibt sich nämlich auch hier der Vorteil, daß die Mineralwollerzeugnisse bzw. -dämmstoffe thermisch bis an den Erweichungspunkt der Mineralfasern eingesetzt werden können, ohne daß sich durch thermische Spaltung beispielsweise organischer Substanzen schädliche oder unangenehm riechende Gase bilden.

Nachfolgend seien noch weitere vorteilhafte Ausgestaltungen der Erfindung erläutert. Vorteilhaft kann ein Verdickungsmittel, wie Polysaccharide, Carbooxylmethylzellulose, Polyvinylalkohol oder ein Phenol-Formaldehyd-Harnstoffharzgemisch, hinzugefügt werden.

Für die Anwendung der Erfindung sind als Mineralfasern vor allem alkaliarme Fasern, wie Steinwolle, geeignet.

In weiterer Verbesserung der Erfindung wird zusätzlich ein Schmälzmittel, wie Mineralöl oder Öl-in-Wasser-Emulsionen, in feinster Verteilung beigegeben.

Schließlich können erfindungsgemäß in einem nachgeschalteten Aggregat noch weitere oder überhaupt die für den jeweiligen Anwendungsbereich erforderlichen Imprägnierungsmittel über eine Aerosol- oder Dampfphase in das Mineralwollerzeugnis bzw. den Dämmstoff eingebracht werden.

Allgemein sei zur Erfindung noch folgendes erläutert.

Das in Wasser dispergierte, mit den verschiedenen Kunststoffen modifizierte Aluminiummetaphosphat oder das in Wasser gelöste Monoaluminiumphosphat wird allein oder zusammen mit Schmälzmitteln, wie z.B. Mineralölen, Öl-in-Wasser-Emulsionen in feinster Verteilung auf die Fasern aufgesprüht. Dabei bewirken die eingesetzten Kunststoffzusätze in Verbindung mit dem natürlichen Hydratgehalt des Aluminiummetaphosphats oder des Monoaluminiumphosphats zunächst eine ausreichende Haftung der Bindemittelfilme/ -tröpfchen auf den Fasern. Gleichzeitig bleibt die Reaktivität des Bindemittels erhalten. Das ist die elementare Voraussetzung dafür, daß die auf diese Weise imprägnierten Fasern normal aufgesammelt und in bekannter Weise einem Härteofen zugeführt werden können. Durch den entsprechenden Abstand der Druckbänder/ -rollen voneinander und die entsprechende Einstellung der Verweildauer sowie der Faserstromdichte können Dicke, Rohdichte, Orientierung, also die Struktur des Mineralwollerzeugnisses bzw. des Dämmstoffs, festgestellt werden.

Durch einen Heißluftstrom mit Temperaturen zwischen 250° C und 500° C, vorzugsweise 275° C bis 350° C, wird sowohl die noch vorhandene Feuchte ausgetrieben als auch der Kunststoffanteil entfernt. Es bildet sich die gewünschte Phosphatglasbindung sowohl mit den vorzugsweise alkaliarmen Steinfasern als auch untereinander. Durch die sehr ähnlichen Ausdehnungskoeffizienten zwischen dem Phosphatglas und dem Faserglas ergeben sich dauerhafte Bindungen.

**Patentansprüche**

1. Mineralwollerzeugnis, bestehend im wesentlichen aus Mineralfasern, insbesondere Steinwolle, und Bindemittel, welches unter Hitzebehandlung aushärtbar ist, dadurch gekennzeichnet, daß als Bindemittel in Wasser dispergiertes Aluminiummetaphosphat $Al(PO_3)_3$ vorgesehenist.

2. Mineralwollerzeugnis nach Anspruch 1, dadurch gekennzeichnet, daß der Anteil an Aluminiummetaphosphat etwa 3 bis 20 Masse-%, vorzugsweise 7 bis 12 Masse-%, bezogen auf die Gesamtmasse beträgt.

3. Mineralwollerzeugnis, bestehend im wesentlichen aus Mineralfasern, insbesondere Steinwolle, und Bindemittel, welches unter Hitzebehandlung aushärtbar ist, dadurch gekennzeichnet, daß als Bindemittel in Wasser gelöstes Monoaluminiumphosphat $Al(H_2PO_4)_3$ vorgesehen ist.

4. Mineralwollerzeugnis nach einem der vorhergehenden Ansprüche, dadurch gekennzeichnet, daß ein Verdickungsmittel, wie Polysaccharide, Carbooxylmethylzellulose, Polyvinylalkohol oder ein Phenol-Formaldehyd-Harnstoffharzgemisch hinzugefügt ist.

5. Mineralwollerzeugnis nach einem der vorhergehenden Ansprüche, dadurch gekennzeichnet, daß als Mineralfasern alkaliarme Fasern, wie Steinwolle, vorgesehen sind.

6. Mineralwollerzeugnis nach einem der vorhergehenden Ansprüche, dadurch gekennzeichnet, daß zusätzlich ein Schmälzmittel, wie Mineralöl oder Öl-in-Wasser-Emulsionen, in feinster Verteilung vorgesehen ist.

7. Mineralwollerzeugnis nach einem der vorhergehenden Ansprüche, dadurch gekennzeichnet, daß zusätzlich Imprägnierungsmittel über eine Aerosol- oder Dampfphase eingebracht sind.

8. Mineralwollerzeugnis nach Anspruch 3, dadurch gekennzeichnet, daß der Anteil an Monoaluminiumphosphat etwa 3 bis 20 Masse-%, bezogen auf die Gesamtmasse, beträgt.

Europäisches
Patentamt

EUROPÄISCHER RECHERCHENBERICHT

Nummer der Anmeldung

EP    92 10 4059
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-2 093 014 (DIDIER-WERKE AG)<br>* Seite 1, Zeile 44 - Zeile 46; Ansprüche 1,4,6 *<br>--- | 3-5,8 | C04B28/34<br>//(C04B28/34,<br>14:38,24:38)<br>(C04B28/34,<br>14:38,24:24) |
| Y | GB-A-922 384 (ARTRITE RESINS LTD.)<br>* Seite 3, Zeile 41 - Zeile 64 *<br>--- | 1,2 | |
| Y | FR-A-2 281 907 (FRENZELIT ASBESTWERKE)<br>* Ansprüche 1,10,14 *<br>--- | 1,2 | |
| A | US-A-3 150 034 (M. S. VUKASOVICH ET AL.)<br>* Spalte 5, Zeile 3 - Zeile 7; Ansprüche 1,5 *<br>--- | 1,3,4 | |
| A | CHEMICAL ABSTRACTS, vol. 94, no. 16,<br>20. April 1981, Columbus, Ohio, US;<br>abstract no. 126308R,<br>MATSUSHITA ELECTRIC WORKS LTD: 'Binders for refractory materials'<br>Seite 310 ;<br>* Zusammenfassung *<br>& JP-A-80 100 264 (MATSUSHITA E. W.)<br>--- | 3,4 | |
| | | | RECHERCHIERTE SACHGEBIETE (Int. Cl.5 ) |
| A | US-A-2 444 347 (H. H. GREGER ET AL.)<br>* Ansprüche 1,14 *<br>--- | 1,3,5 | C04B |
| A | US-A-2 702 068 (L. W. SPOONER)<br>* Ansprüche 1,2 *<br>--- | 1,3,7 | |
| A | CHEMICAL ABSTRACTS, vol. 100, no. 24,<br>11. Juni 1984, Columbus, Ohio, US;<br>abstract no. 196896X,<br>JAPAN VILENE CO.: 'INORGANIC FIBER SHEET'<br>Seite 309 ;<br>* Zusammenfassung *<br>& JP-A-59 018 150 (JAPAN VILENE CO.)<br>--- | 3 | |
| A | CH-A-355 825 (WESTINGHOUSE ELECTRIC CORP.)<br>* Ansprüche I,1,9 *<br>--- | | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 17 JUNI 1992 | DAELEMAN P.C.A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)

Europäisches
Patentamt

**EUROPÄISCHER RECHERCHENBERICHT**

Nummer der Anmeldung

EP    92 10 4059
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | BE-A-887 854 (CENTRE DE RECHERCHES DE L'INDUSTRIE BELGE DE LA CERAMIQUE)<br>--- | | |
| A | DE-A-1 927 635 (MATSUSHITA ELECTRIC WORKS LTD)<br><br>----- | | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 17 JUNI 1992 | DAELEMAN P.C.A. |